# EUROPÄISCHE PATENTSCHRIFT

(11) **EP 0 417 544 B1**
(45) Veröffentlichungstag und Bekanntmachung des Hinweises auf die Patenterteilung: **06.04.1994**
(21) Anmeldenummer: 90116548.0
(22) Anmeldetag: 29.08.1990
(51) Int. Cl.: C09C 1/00

(54) **Verfahren zur Herstellung von anorganischen oxidischen Pigmenten bzw. oxidischen keramischen Farbkörpern**
Process for preparing inorganic oxide pigments or ceramic oxide pigments
Procédé de fabrication de pigments inorganiques oxydiques ou de pigments céramiques oxydiques

(30) Priorität: 09.09.1989 DE 3930098
(43) Veröffentlichungstag der Anmeldung: 20.03.1991
(73) Patentinhaber: BASF Lacke + Farben AG, 48165 Münster-Hiltrup (DE)
(72) Erfinder: Gaedcke, Harald, Dr., D-7250 Leonberg (DE); Etzrodt, Guenter, Dr., D-7000 Stuttgart 1 (DE); Liedek, Egon, Dr., D-7300 Esslingen (DE)
(74) Vertreter: Schweiss, Werner, Dr.

(56) Entgegenhaltungen:
- US-A- 3 406 228
- US-A- 3 533 820
- CHEMICAL ABSTRACTS, Band 104, Nr. 16, April 1986, Zusammenfassung-Nr. 134782f, Seite 302, Spalte 1, Columbus, Ohio, US; K.D. FRITSCHE: "Pink colours for the ceramic industry"
- CHEMICAL ABSTRACTS, Band 84, Nr. 14, 5. April 1976, Zusammenfassung-Nr. 92287j, Seite 136, Spalte 2, Columbus, Ohio, US; H. MIYAZAKA: "Uniform powder mixtures containing titanium oxide"

## Beschreibung

Gegenstand der vorliegenden Erfindung ist ein Verfahren zur Herstellung von anorganischen Pigmenten oder von keramischen Farbkörpern aus Mischoxiden.

Anorganische Pigmente aus Mischoxiden oder oxidische Mischphasenpigmenten sind Pigmente, die in einem stabilen Oxidgitter kristallisieren und ihre Farbe dem Einbau von farbgebenden Kationen in dieses Gitter verdanken. Die wichtigsten Mischphasenpigmente sind Spinell-Mischphasenpigmente mit dem Kristallgitter des Spinells MgAl₂O₄ bei dem das Magnesium und/oder das Aluminium durch farbgebende Kationen ersetzt ist z.B. Kobaltblau CoAl₂O₄, Zinkeisenbraun ZnFe₂O₄ und die sogenannten Inversspinelle z.B. (Co,Ni,Zn)₂TiO₄ (Kobaltgrün). Bekannt sind auch die Rutil-Mischphasenpigmente mit dem Rutilgitter, bei denen farbige Übergangsmetalle auf den Titanplätzen eingebaut sind. Keramische Farbkörper sind Verbindungen von Oxiden der Übergangsmetalle miteinander oder mit Metalloxiden von Elementen der Hauptgruppen des Periodensystems und können ebenfalls nach dem Spinell-Typus aufgebaut sein. Sie können aber auch auf Basis von farblosen Verbindungen wie Zirkonsilikat, Zirkonoxid oder Zinnoxid bestehen, in deren Kristallgitter färbende Ionen der übergangsmetalle eingebaut sind, z.B. beim Zirkonvanadinblau, Zirkonpraseodymgelb, Zinnvanadingelb und Zirkoneisenrosa.

Diese oxidischen Verbindungen werden prinzipiell durch Reaktion der oxidischen Komponenten oder von Verbindungen, die bei den Calciniertemperaturen in die Oxide überführbar sind, in festem Zustand bei Temperaturen im Bereich von 800 bis 1400°C hergestellt. Hierzu wird eine Mischung der pulverförmigen Ausgangsstoffe in keramischen Kapseln oder Schalen in beheizten Öfen, z.B. Herd, -Schub- und Tunnelöfen den jeweils erforderlichen Temperaturen ausgesetzt. Diese Verfahren haben den Nachteil, daß hiermit nur schwierig eine gleichbleibende Qualität der Produkte zu erzielen ist, da eine gleichmäßige Temperatureinstellung über die gesamte Schichtdicke kaum möglich ist. Für das Brennen in Drehrohröfen entfällt dieser Nachteil, dafür kann aber z.B. aufgrund verschiedener Dichten der einzelnen Komponenten eine Entmischung des Ausgangsgemisches auftreten, sodaß in ihrer Zusammensetzung nicht reproduzierbare Produkte entstehen.

In der DE-OS 23 20 806 wird ein Verfahren zur Herstellung von anorganischen Pigmenten oder keramischen Farbkörpern beschrieben, bei dem man eine Mischung der Ausgangsstoffe in Form einer wäßrigen Suspension oder Paste mit einem H₂O-Gehalt zwischen 80 und 70 Gew.% auf die auf mindestens 500°C erhitzte Oberfläche eines horizontalen, ebenen und sich um seinen Mittelpunkt drehenden Ringes aufbringt und die Mischung während einer Ringdrehung auf die Bildungstemperatur des Glühproduktes aufheizt, calciniert und von der Ringoberfläche entfernt. Dieses Verfahren hat den Nachteil, daß während der Trocknung die löslichen Bestandteile der Suspension auskristallisieren, sich an der Oberfläche anreichern und so zu Entmischungen und Verkrustungen führen, die die Bildung eines homogenen Produktes unmöglich machen.

Aus der DE-PS 32 42 747 ist ferner ein Verfahren zur Herstellung anorganischer Pigmente durch Glühen von Pulvergemischen aus Zirkondioxid und sonstigen Metalloxiden oder Nichtmetalloxiden sowie gegebenenfalls Mineralisatoren und Pulverisieren der erhaltenen Glühprodukte bekannt, bei dem das Pulvergemisch vor dem Glühen zu Formkörpern verdichtet wird. Das Glühen kann in Drehschuböfen oder Drehrohröfen erfolgen. Das Verfahren hat den Nachteil, daß die stark verdichteten Formkörper bei der nachfolgenden Calcinierung nur bei vergleichsweise langen Verweilzeiten über ihren gesamten Querschnitt die erforderliche Reaktionstemperatur erreichen, d.h., daß die äußeren Zonen schneller als die inneren Zonen des Formkörpers die erforderliche Temperatur erreichen. Da das Kristallwachstum von der jeweiligen Temperatur und dem zeitlichen Verlauf der Temperatureinstellung abhängt, führt dies zu einem unerwünschten ungleichmäßigen Kornwachstum innerhalb des Formkörpers, was sich nachteilig auf die Eigenschaften der herzustellenden Pigmente auswirkt.

Der vorliegenden Erfindung lag die Aufgabe zugrunde, ein Verfahren zur Herstellung von anorganischen oxidischen Pigmenten bzw. oxidischen keramischen Farbkörpern durch Vermischen der Ausgangsstoffe in Gegenwart von Wasser, gegebenenfalls unter Zugabe von Mineralisatoren, Trocknen und anschließendes Calcinieren in einem Drehrohrofen, gegebenenfalls anschließendes Mahlen, Waschen und/oder Trocknen der Glühprodukte bereitzustellen, bei dem die Nachteile der bekannten Verfahren nicht auftreten. Durch das Verfahren sollte insbesondere sichergestellt werden, daß in kurzen Trocknungszeiten die homogene Mischung der Ausgangskomponenten erhalten bleibt, keine Entmischung durch unkontrollierte Kristallisation der löslichen Komponenten stattfindet, im Drehrohrofen keine störende Staubentwicklung bei gleichzeitiger Verhinderung von Belagbildungen und Anbackungen auftritt, und dadurch eine gleichmäßige Calcinierung gewährleistet ist.

Es wurde nun gefunden, daß diese Aufgabe dadurch gelöst werden kann, daß man die Ausgangsstoffe in Gegenwart von Wasser zu einer pumpbaren Suspension mit Teilchengrößen von 50 % < 10 µm und von 100 % < 50 µm verarbeitet, die Suspension durch Entzug von Wasser durch Sprühtrocknung zu porösen Granulaten verfestigt und die Granulate im Korngrößenbereich zu > 97 % von 20 bis 800 µm der Calcinierung zuführt.

Für die Durchführung des erfindungsgemäßen Verfahrens geht man von den Oxiden der Komponenten der herzustellenden Pigmente bzw. keramischen Farbkörper aus, bzw. von Verbindungen, die bei den Calciniertemperaturen thermisch in die Oxide übergeführt werden, z.B. insbesondere Hydroxide, Carbonate, Nitrate und Oxalate. Die Reaktionskomponenten werden möglichst feinteilig eingesetzt und mit soviel Wasser versetzt, daß eine pumpbare Suspension entsteht. In der Regel enthalten die Suspensionen 20 bis 40 Gew.% Feststoffe. Die wäßrigen Mischungen werden dann einer Naßmahlung z.B. in einer Kugelmühle oder Rührwerkskugelmühle, bzw. bei bereits ausreichender Feinheit der nicht in Wasser lösbaren Rohstoffe einer Naßhomogenisierung z.B. in einem Rührbehälter mit geeignetem Schnellrührer, unterworfen. Die Mahlung ist beendet, wenn mindestens 50 % der Partikel eine Teilchengröße < 10 µm und 100 % der Partikel eine Teilchengröße < 10 µm aufweisen (Meßmethode: Lasergranulometer).

Selbstverständlich können den Ausgangsstoffen auch Hilfsstoffe zugesetzt werden, die auch wasserlöslich sein können. Hilfsstoffe sind z.B. die bekannten Mineralisatoren, durch die das Kristallwachstum in günstiger Weise beeinflußt wird. Als Mineralisatoren seien beispielsweise genannt Alkali- oder Erdalkalihalogenide, Alkaliphosphate und -Borate.

Die Suspension wird dann einer Sprühdüse zugeführt und in einen Sprühturm versprüht, in dem die gebildeten Tropfen im freien Fall verfestigt werden, ohne Verwendung von formbildenden Zusatzstoffen.

Man erhält hierbei Granulate mit einer porösen Struktur. Von diesen Granulaten werden, falls erforderlich die Feinanteile und die Grobanteile abgetrennt, sodaß mindestens 97 % der Granulate im Korngrößenbereich von 20 bis 800 µm liegen. Fein- und Grobanteile können wieder als Ausgangsprodukte für die Herstellung der Suspensionen eingesetzt werden.

Die Granulate in dem genannten Korngrößenbereich werden dann in einem Drehrohrofen calciniert, wobei je nach dem herzustellenden Endprodukt die Calciniertemperatur verschieden sein kann. Wegen der besonderen porösen Struktur der für die Calcinierung eingesetzten Sprühgranulate ist es jedoch möglich, die Calcinierung bei niedrigeren Temperaturen bzw. kürzeren Verweilzeiten - bei Erzielung gleichwertiger Produktqualitäten - durchzuführen als dies z.B. bei der herkömmlichen Calcinierung von Pulvermischungen der Fall ist. Dies hat den Vorteil, daß damit für die Herstellung vieler Pigmente überhaupt indirekt beheizte Drehrohröfen eingesetzt werden können, da diese wegen der Beständigkeit der für die Konstruktion des Rohres verwendeten Metallegierungen nur beschränkt hohe Calciniertemperaturen zulassen.

### Beispiel 1

1000 kg Titandioxid (Anatas), 152 kg Antimon-III-oxid, 56 kg Chrom-III-oxid und 21 kg Magnesiumcarbonat werden in einem 5000 l-Rührbehälter mit Schnellrührer unter Vorlage von 2100 l vollentsalztem Wasser eingeschlämmt. Die so erhaltene Suspension wird in einer Zeit von 6 Stunden durch ein Zerkleinerungsaggregat nach dem Rotor-Stator-Prinzip ("Dispax"-Reaktor) im Kreislauf gefahren. Die Leistung des Dispax-Reaktors beträgt 3000 l/Stunde. Die mittlere Korngröße der Teilchen in der Suspension beträgt 0,9 µm; 99,7 % der Partikel sind < 5,0 µm und 100 % der Partikel sind < 10,0 µm. Der Feststoffgehalt in der Suspension beträgt 38 Gew.%. Diese Suspension wird in einem Sprühtrockner mit einem Durchmesser von 3,8 m und einer zylindrischen Höhe von 6,0 m durch Druckzerstäubung bei 12 bar durch eine Düse (Durchmesser 1,8 mm) und Trocknung nach dem Gegen-Gleichstrom-Prinzip zu einem rieselfähigen Pigment-Vorprodukt getrocknet, welches aus kleinen Kügelchen mit Schwammstruktur besteht. Die durch Direktbeheizung erwärmte Trocknungsluft hat eine Eintrittstemperatur von 340°C und eine Austrittstemperatur von 150°C. Das erhaltene Feingranulat hat folgende Verteilung, ermittelt durch eine Siebanalyse:
> 500 µm: 0,0 %; > 250 µm: 6,2 %; > 125 µm: 82 %; > 90 µm: 95 %; > 20 µm: 99,7 %. Die Restfeuchte ist < 0,5 Gew.%. Die mittlere Granulatgröße beträgt 180 µm.

Das gebildete Feingranulat wird über ein Silo als Zwischenlager durch eine Dosierschnecke in einen indirekt beheizten Drehrohrofen gefördert. Dieser hat eine beheizte Länge von 5,5 m und einen Innendurchmesser von 0,37 m. Die Brenntemperatur beträgt 1040°C, die Verweilzeit im beheizten Teil des Drehrohrofens 30 Minuten. Die Oxidation des Antimons vom SbIII zum SbV erfolgt durch direktes Dosieren von Salpetersäure in den Brennraum des Drehrohrofens. Anbackungen und Staubbildung im Drehrohrofen treten nicht auf, es bildet sich eine gut fließende Produktschüttung aus, wodurch alle Pigmentpartikel einer gleichmäßigen Brenntemperatur unterliegen.

Das so erhaltene Brennprodukt wird der üblichen Aufarbeitung unterworfen; bestehend aus einer Naßmahlung, Filtration, Trocknung und Trockenmahlung oder einer Trockenmahlung mit integrierter Sichtung und einer Homogenisierung in einem Mischer. Als Endprodukt wird ein coloristisch reines, farbstarkes ockerfarbiges Chromtitanpigment mit Rutilstruktur erhalten.

### Beispiel 2

1875 kg Titandioxid, 340 kg Antimon-III-oxid, 128 kg Chrom-III-oxid und 129,3 kg Magnesiumnitrat werden in einem 10 000 l-Rührbehälter mit Schnellrührer unter Vorlage von 4130 l vollentsalztem Wasser eingeschlämmt. Die so erhaltene Suspension wird in einer Zeit von 8 Stunden durch einen "Dispax"-Reaktor im Kreislauf gefahren (Durchsatzleistung 3000 l/h). Die mittlere Korngröße der Teilchen in der Suspension beträgt 1,0 µm: 95,1 % der Partikel sind < 5,0 µm, 99,0 % < 10,0 µm und 100 % < 20 µm. Der Feststoffgehalt in der Suspension beträgt 37 Gew.%. Die Suspension wird analog Beispiel 1 zu einem Feingranulat getrocknet. Das erhaltene Granulat hat folgende Verteilung: > 500 µm 1,8 %; > 250 µm 19,2 %; > 125 µm 81,3 %; > 90 µm 92,7 %; > 20 µm 100 %. Die weitere Verarbeitung erfolgt analog Beispiel 1. Als Endprodukt wird ein coloristisch reines, rotstichiges farbstarkes Chromtitanpigment erhalten.

### Beispiel 3

50 kg Aluminiumhydroxid (Hydrargillit, D₅₀ : 1,5 µm) werden mit 20 kg Cobalthydroxid und 165 l Wasser in einer Kugelmühle mit einem Volumen von 400 l 8 Stunden lang gemahlen. Die Kugelmühle ist mit einer Menge von 100 kg Mahlkugeln von einem Durchmesser zwischen 20 und 50 mm gefüllt.

Die Umdrehungsgeschwindigkeit beträgt 30 U/min. Die entstandene Suspension hat einen Feststoffgehalt von 29,8 Gew.%; 100 % der Teilchen sind < 10 µm. Die Suspension wird analog Beispiel 1 unter Einhaltung folgender Randbedingungen sprühgranuliert:

| | |
|---|---|
| Druck: | 14 bar |
| Düsendurchmesser: | 1,1 mm |
| Gas-Eintrittstemperatur: | 330°C |
| Gas-Austrittstemperatur: | 145°C |

Das erhaltene Feingranulat hat folgende Kornverteilung, ermittelt durch eine Siebanalyse:
> 500 µm: 0,0 %; > 250 µm: 0,8 %; > 125 µm: 56 %; > 90 µm: 81 %; > 20 µm: 99,9 %.

Das Feingranulat wird dem üblichen Brennprozeß in einem Drehrohrofen bei einer Brenntemperatur von 1240°C unterworfen. Nach dem Brennen ist die Kugelform des Feingranulats erhalten geblieben. Die weitere Aufarbeitung wird wie üblich durch Naßmahlung, Filtration und Trockenmahlung durchgeführt. Als Endprodukt wird ein coloristisch reines, farbstarkes Kobaltblau-Pigment erhalten.

### Beispiel 4

Analog zu Beispiel 1 kann ein oxidisches Pigment mit Spinellstruktur erhalten werden, indem 108 kg Aluminiumhydroxid (Hydrargillit, D₅₀ : 1,5 µm), 58,2 kg Cobalthydroxid, 70,4 kg Chrom-III-oxid, 5,0 kg Zinkoxid und 8,4 kg Zinkchlorid in einem Rührbehälter eines Dissolvers unter Vorlage von 480 l Wasser intensiv mit mindestens 2000 U/min über eine Zeit von 15 Minuten dispergiert werden. Der Feststoffgehalt der Suspension beträgt 34,2 Gew.%, 100 % der Teilchen sind < 10 µm.

Diese Suspension wird analog Beispiel 1 unter Einhaltung folgender Randbedingungen sprühgranuliert:

| | |
|---|---|
| Druck: | 12 bar |
| Düsendurchmesser: | 1,1 mm |
| Gas-Eintrittstemperatur: | 340°C |
| Gas-Austrittstemperatur: | 150°C |

Das erhaltene Feingranulat hat folgende Kornverteilung, ermittelt durch eine Siebanalyse:
> 500 µm: 0,0 %; > 250 µm: 1,4 %; > 125 µm: 59 %; > 90 µm: 82 %; > 20 µm: 99,9 %.

Das gebildete Feingranulat wird in einem Drehrohrofen mit einer beheizten Länge von 2100 mm und einem Durchmesser von 170 mm bei einer Heiztemperatur von 1150°C gebrannt. Die Verweilzeit des Brenngutes im Heizraum beträgt 40 Minuten. Es bildet sich eine gut fließende Produktschüttung aus, wodurch alle Pigmentpartikel einer gleichmäßigen Brenntemperatur unterliegen. Anbackungen und Staubbildung im Drehrohrofen treten nicht auf, die Granulatform des Brenngutes bleibt erhalten. Durch die gleichmäßige Verteilung des Zinkchlorids im Feingranulat ist es möglich, die bei der herkömmlichen Pulvertechnologie erforderliche Brenntemperatur von 1220°C auf 1150°C zu reduzieren, ohne die Coloristik des Pigments, insbesondere die Reinheit, zu verändern. Der Einsatz von Drehrohröfen mit metallischen Rohren und indirekter Beheizung zur Herstellung coloristisch reiner Kobaltblau-Pigmente ist durch die erfindungsgemäße Arbeitsweise möglich geworden.

Die weitere Aufarbeitung wird wie üblich durch Naßmahlung, Filtration und Trockenmahlung durchgeführt. Als Endprodukt wird ein coloristisch reines, grünstichiges, farbstarkes Kobaltblau-Pigment erhalten.

### Beispiel 5

Analog zu Beispiel 4 kann ein rotstichiges, farbstarkes, coloristisch reines Kobaltblau-Pigment hergestellt werden, indem 204,8 kg Aluminiumhydroxid, 82,4 kg Kobalthydroxid und 23,6 kg Magnesiumchlorid · 6 H₂O mit 450 l Wasser im Dissolver dispergiert werden. Der Feststoffgehalt beträgt 40,8 %. Die weitere Verarbeitung erfolgt analog zu Beispiel 4, der Brand im Drehrohrofen erfolgt ebenfalls bei 1150°C Heizraumtemperatur.

### Beispiel 6

Analog zu Beispiel 1 werden die pulverförmigen Rohstoffe, bestehend aus 78 kg Praseodymoxid (Pr₆0₁₁), 10 kg Natriumfluorid, 5 kg Natriumchlorid, 307 kg Siliciumdioxid (D₅₀ : 6,5 µm) und 550 kg Zirkondioxid (D₅₀ : 8,0 µm) mit 650 l Wasser in einem 2000 l-Rührbehälter angeschlämmt und anschließend durch eine Rührwerkskugelmühle, gefüllt mit Aluminiumoxidkugeln von 1,5 mm Durchmesser, gemahlen. Die Suspension wird mit sich wiederholenden Passagen so häufig durch die Rührwerkskugelmühle gefahren, bis eine mittlere Teilchengröße der Rohstoffpartikel von 3,8 µm erreicht ist, wobei 60 % der Partikel < 5,0 µm; 89 % der Partikel < 10,0 µm und 100 % der Partikel < 20,0 µm sind. Der Feststoffgehalt der Suspension beträgt 59,0 %. Diese Suspension wird analog Beispiel 1 unter Einhaltung folgender Randbedingungen sprühgetrocknet:

| | |
|---|---|
| Druck: | 18 bar |
| Düsendurchmesser: | 1,1 mm |
| Gaseintrittstemperatur: | 320°C |
| Gasaustrittstemperatur: | 150°C |

Das erhaltene Feingranulat hat folgende Kornverteilung, ermittelt durch eine Siebanalyse:
> 800 µm: 0 %; > 500 µm: 3,1 %; > 250 µm: 35,4 %; > 125 µm: 70,6 %; > 90 µm: 90,9 %; > 20 µm: 100,0 %.

Die löslichen Mineralisatoren NaF und NaCl sind gleichmäßig in Feingranulat verteilt. Bei der weiteren Verarbeitung analog Beispiel 1, jedoch bei einer Brenntemperatur von 1000°C, zeigt sich, daß durch die eingesetzte Menge von 1,6 % an Mineralisator, bezogen auf die Rohstoffmischung das gleiche Korngrößenwachstum der Pigmentpartikel erreicht wird, das bei der herkömmlichen Pulvertechnologie erst bei einer Menge von 3,6 % Mineralisator erhalten wird. Nach der üblichen Aufarbeitung analog Beispiel 1 wird Praseodymgelb als Endprodukt erhalten.

### Beispiel 7

Analog zu Beispiel 1 kann ein zitronenfarbiges Rutilmischphasenpigment erhalten werden, indem 978 kg Titandioxid (Anatas), 140 kg Antimontrioxid und 126,2 kg Nickelnitrat mit 1800 l Wasser in einem 5000 l-Rührbehälter mit Schnellrührer eingeschlämmt werden. Die weitere Verarbeitung verläuft entsprechend Beispiel 1. Es wird als Endprodukt ein coloristisch reines, farbstarkes Nickeltitanpigment erhalten.

## Patentansprüche

1. Verfahren zur Herstellung von anorganischen oxidischen Pigmenten bzw. oxidischen keramischen Farbkörpern durch Vermischen der Ausgangsstoffe in Gegenwart von Wasser, gegebenenfalls unter Zugabe von Hilfsstoffen, Trocknen und anschließendes Calcinieren in einem Drehrohrofen, gegebenenfalls anschließendes Mahlen, Waschen und/oder Trocknen der Glühprodukte, dadurch gekennzeichnet, daß man die Ausgangsstoffe in Gegenwart von Wasser zu einer pumpbaren Suspension mit Teilchengrößen von 50 % < 10 µm und von 100 % < 50 µm verarbeitet, die Suspension durch Druckzerstäubung mittels einer Düse unter Entzug von Wasser zu porösen Granulaten sprühtrocknet und die Granulate im Korngrößenbereich zu > 97 % von 20 bis 800 µm der Calcinierung zuführt.

## Claims

1. A process for preparing inorganic oxidic pigments and oxidic ceramic color stains by mixing the starting materials in the presence of water with or without the addition of auxiliaries, drying and subsequently calcining in a rotary tube oven, with or without subsequently grinding, washing and/or drying the calcined products, which comprises processing the starting materials in the presence of water to form a pumpable suspension having particle sizes of 50% < 10 µm and 100% < 50 µm, spray drying the suspension to form porous granules, and calcining those granules which are > 97% within the particle size range from 20 to 800 µm.

## Revendications

1. Procédé de fabrication de corps colorants céramiques oxydiques, ou de pigments oxydiques inorganiques, par le mélange des matières de départ en présence d'eau, sous addition éventuelle d'adjuvants, le séchage et la calcination subséquente dans un four tubulaire rotatif, un broyage subséquent éventuel, le lavage et/ou le séchage des produits calcinés, caractérisé en ce que l'on transforme les matières de départ, en présence d'eau, en une suspension dont 50% des particules ont un calibre inférieur à 10 µm et 100% des particules ont un calibre inférieur à 50 µm, on sèche la suspension par pulvérisation par atomisation sous pression à l'aide d'un ajutage et sous élimination d'eau, de manière à obtenir des granules poreux et on envoie les granules dans la plage granulométrique pour plus de 97% d'entre eux de 20 à 800 µm à la calcination.
